# EUROPÄISCHE PATENTSCHRIFT

(11) **EP 3 318 386 B1**
(45) Veröffentlichungstag und Bekanntmachung des Hinweises auf die Patenterteilung: **06.05.2020**
(21) Anmeldenummer: 17196987.6
(22) Anmeldetag: 18.10.2017
(51) Int. Cl.: B29C 48/35, B29C 48/30, B29C 48/92, B29C 43/24

(54) **EXTRUSIONSVORRICHTUNG**
EXTRUSION DEVICE
DISPOSITIF D'EXTRUSION

(30) Priorität: 07.11.2016 DE 102016121262
(43) Veröffentlichungstag der Anmeldung: 09.05.2018
(73) Patentinhaber: TROESTER GmbH & Co. KG, 30519 Hannover (DE)
(72) Erfinder: Herbing, Karsten, 31319 Sehnde (DE)
(74) Vertreter: Scheffler, Jörg

(56) Entgegenhaltungen:
- EP-A1- 0 344 890
- JP-A- 2011 073 428
- US-A- 3 142 091
- US-A- 3 956 056
- US-A- 5 122 049
- US-A1- 2016 107 363

## Beschreibung

Die Erfindung betrifft eine zur Herstellung eines Profiles aus plastifizierbarem Material bestimmte Extrusionsvorrichtung mit zumindest einem Spritzkopf, in dem das plastifizierte Material einem Spalt zuführbar ist, der durch zumindest eine Walze und zumindest eine in einer Betriebsposition der Extrusionsvorrichtung mittels eines Fixierelementes in einer vorbestimmten Position gegen eine Anlagefläche anliegende Leiste begrenzt ist.

Die gattungsbildende EP 0 344 890 A1 beschreibt bereits eine zur Herstellung eines Profils aus plastifizierbarem Material bestimmte Extrusionsvorrichtung mit zumindest einem Spritzkopf, in dem das plastifizierte Material einem Spalt zuführbar ist. Der Spalt ist durch eine Walze und eine mittels eines Fixierelements in einer vorbestimmten Position gegen eine Anlagefläche anliegende Leiste begrenzt. Weiterhin ist die Leiste durch ein Vorspannelement in radialer Richtung bezogen auf die Walze gegenüber dieser in der Betriebsposition mit einer Kraft vorgespannt. Das Vorspannelement hat zwei zueinander geneigte Kontaktflächen.

Die US 5,122,049 A betrifft eine zur Herstellung eines Profils aus plastifizierbarem Material bestimmte Extrusionsvorrichtung mit einem Spritzkopf. Das plastifizierte Material ist einem Spalt zuführbar, der durch eine Walze und eine Leiste begrenzt ist. Die Leiste wird mittels eines Vorspannelements in eine Lagerpfanne gedrückt.

Weiterhin betrifft die US 3,956,056 A eine Extrusionsvorrichtung mit einem Spritzkopf. Das plastifizierte Material ist einem Spalt zuführbar, der durch eine Walze und eine Leiste begrenzt ist. Die Leiste wird mittels eines Vorspannelementes gegen eine Vorformklinge gedrückt.

Die DE 34 48 026 C2 und die DE 34 24 257 A1 beschreiben bereits Einrichtungen zum Steuern der Austrittsbreite beim Herstellen von Laufstreifen für Autoreifen oder anderen Profilen oder Bahnen aus Kautschuk, Elastomeren oder thermoplastischem Kunststoff, bestehend aus einer am Materialaustritt eines mit einem Antrieb ausgerüsteten Schneckenextruders angeordneten Düse für die Profilierung des Materials. Der Düsenaustritt ist durch ein mit einer auswechselbaren Profilleiste ausgebildeten Gehäuseteil und einer mit einem Antrieb ausgerüsteten, rotierenden, quer zum Düsenaustritt angeordneten Walze gebildet. Mittels Hydraulikzylinder und der damit verbundenen Halterungen wird die auswechselbare Profilleiste sicher in ihren Positionen gehalten.

In der Praxis (siehe zum Beispiel die US 2016/107363 A1) werden solche auch als Einwalzenköpfe bezeichnete Spritzköpfe beispielsweise in der Produktion von Fahrzeugreifen bereits vielfach eingesetzt. Dabei wird eine plastifizierte Kautschukmischung in den Spritzkopf eingespeist und auf volle Produktionsbreite vorgeformt. In dem Spritzkopf befinden sich die auswechselbaren Leisten, die am Austritt zum Walzenspalt für die genaue Anpassung der Spritzkopföffnung an die vorgesehene Bahnendicke sorgen.

Der Einsatz solcher Vorrichtungen eignet sich dabei vor allem für Profile mit einer rechteckigen Querschnittsfläche, beispielsweise glatte Platten und Bahnen, sowie für Profile ohne Hinterschneidungen, beispielsweise profilierte Produkte. Dabei wird einerseits eine hohe Gleichmäßigkeit der Materialdicke über die volle Bahnbreite, andererseits eine gute Homogenität des gewalzten Profiles erreicht.

Die DE 691 10 246 T2 ist sowohl mit einem Walzenpaar als auch mit einer Spritzleiste ausgestattet. Das aus der Düsenöffnung ausgebrachte Gummi wird zwischen einer oberen und einer unteren Rolle gewalzt und geformt.

Wesentliche Vorteile solcher Einwalzenkopf-Vorrichtungen sind vor allem die geringen Werkzeugkosten für die Spritzleiste, die kurzen Umrüstzeiten durch einfachen Werkzeugwechsel und die Eignung für komplizierte Profilformen, insbesondere für Kehlprofile, sowie der insgesamt geringere Investitionsaufwand für solche Vorrichtungen.

Als nachteilig erweist es sich in der Praxis die übliche Fixierung der Leiste durch eine Verklammerung, bei der die Wirkrichtung der Fixierkraft schräg auf die Leiste drückt. Dadurch kann es bei der Fixierung zu einer unbeabsichtigten Verlagerung der Leiste gegenüber der Anlagefläche kommen und infolgedessen der Spalt abweichend von seiner Sollposition eine undefinierte Größe aufweisen bzw. in undefinierter Weise gegen die Walze vorgespannt sein.

Der Erfindung liegt die Aufgabe zugrunde, eine zuverlässige Einstellmöglichkeit und Positionierung in der Betriebsposition der Leiste zu schaffen.

Die Aufgabe wird erfindungsgemäß mit einer Extrusionsvorrichtung gemäß den Merkmalen des Anspruches 1 gelöst. Die weitere Ausgestaltung der Erfindung ist den Unteransprüchen zu entnehmen.

Erfindungsgemäß ist also eine Extrusionsvorrichtung vorgesehen, bei der das Vorspannelement als ein Schwenkhebel ausgeführt ist, der um eine zu der Walzenachse parallele Spannachse schwenkbeweglich ist, um so nicht nur durch entsprechend bemessene Hebelarme eine Verstärkung der eingeleiteten Kraft zu ermöglichen, sondern zudem auch zugleich zwei in ihrer Position und Orientierung veränderliche Kontaktflächen an demselben Schwenkhebel realisieren zu können. Weiterhin kann der Schwenkhebel auch nach dem Prinzip einer Exzenternocke zur Kraftübertragung ausgeführt sein.
Das Druckübertragungselement ist zum Ausgleich von Abweichungen von der gewünschten bzw. vorbestimmten parallelen Orientierung des Druckübertragungselementes gegenüber der Druckfläche der Leiste als eine um zumindest eine Achse schwenkbarer doppelarmiger Hebel oder als eine Wippe ausgeführt. Hierdurch wird es erstmals möglich, eine Fixierkraft mit einer Wirkrichtung parallel zu der Flächennormalen der Druckfläche zu übertragen. Dies wird möglich, indem das Druckübertragungselement nicht wie beim Stand der Technik üblich, eine konstruktiv vorgegebene und im Betrieb unveränderliche Orientierung aufweist, sondern erfindungsgemäß nach dem Prinzip eines doppelarmigen Hebels um eine Achse schwenkbeweglich ist. Somit erfolgt stets eine selbstausrichtende parallele Orientierung des Druckübertragungselementes gegenüber der Druckfläche der Leiste. Selbstverständlich kann die Schwenkbeweglichkeit des Druckübertragungselementes insbesondere durch Anschläge beschränkt werden, wobei die Achse bevorzugt nur einen geringen Abstand gegenüber der Kontaktebene zwischen dem Druckübertragungselement und der Druckfläche der Leiste von beispielsweise zwischen 0,5 cm und 5 cm aufweist. Dadurch ist sichergestellt, dass eine Kraftübertragung auf die Leiste erst dann Erfolg, wenn die parallele Selbstausrichtung des Druckübertragungselementes tatsächlich eingetreten ist. Selbstverständlich ist die Schwenkbewegung nicht auf einen einzigen Freiheitsgrad beschränkt. Vielmehr kann das Druckübertragungselement auch kardanisch aufgehängt sein. Beispielsweise eignet sich hierzu auch ein sphärisches Element, insbesondere eine Kugel, als Lagerelement.

Als besonders praxisgerecht erweist es sich, wenn das Druckübertragungselement an einem schwenkbeweglichen Träger an einem einer Schwenkachse des Trägers abgewandten Endabschnitt angeordnet ist, um so eine problemlose Öffnung des Spritzkopfes zu erreichen. Dadurch kann der Träger zusammen mit dem Druckübertragungselement nahezu vollständig aus dem Öffnungsbereich heraus verschwenkt und zudem problemlos die Leiste ausgetauscht werden.

Eine besonders bevorzugte Ausgestaltungsform der Erfindung wird auch dadurch erreicht, dass die Achse der Wippe eine Orientierung parallel zu einer Walzenachse der Walze und/oder der Schwenkachse des Trägers aufweist, um so der mit dem Schließen des Spritzkopfes einhergehende Schwenkbewegung des Trägers durch eine kontinuierliche Anpassung der Neigung des Druckübertragungselementes zu folgen. Somit kann auch während der Schließbewegung eine stets parallele Ausrichtung des Druckübertragungselementes gegenüber der Leiste aufrechterhalten werden.

Die Zustellung des Trägers kann mittels eines Antriebes erfolgen. Besonders praxisnah ist hingegen eine Ausgestaltungsform der Erfindung, bei welcher der Träger mittels eines insbesondere manuell betätigbaren, insbesondere als Kniehebelverschluss ausgeführten Bedienhebels von einer Ruheposition in die Betriebsposition schwenkbeweglich ausgeführt ist. Hierdurch wird eine problemlos handhabbare und in der Betriebsposition selbsttätig klemmende Arretierung der Leiste sichergestellt, wobei zumindest in der Betriebsposition eine zusätzliche Rastfunktion zur Sicherung ebenso vorgesehen sein kann wie eine sensorische Überwachung mittels einer Steuereinheit.

Die Wirkrichtung der Fixierkraft des Fixierelementes könnte senkrecht zu einer Spaltebene verlaufen. Besonders bevorzugt verläuft hingegen die Wirkrichtung der mittels des Druckkörpers in der Betriebsposition übertragbaren Kraft gegen die Druckfläche der Leiste tangential zu der Walze, sodass der Kraftvektor der Fixierkraft frei von Richtungskomponenten in Zustellrichtung zu der Walze ist.

Indem die Leiste durch ein um eine Spannachse schwenkbewegliches Vorspannelement in radialer Richtung bezogen auf die Walze gegenüber dieser in der Betriebsposition vorgespannt ist,wirkt das Vorspannelement auf eine der Walze abgewandte Schmalseite bzw. Stirnfläche der Leiste, sodass aufgrund einer Veränderung der Winkelstellung des Vorspannelementes eine Zustellung der Leiste gegenüber der Walze erreicht wird. Vorzugsweise erfolgt die Zustellung aufgrund der Schwenkbewegung des Vorspannelementes zugleich mit dem Schließen des Spritzkopfes, während die Öffnungsbewegung des Spritzkopfes und des Vorspannelementes entgegen einer auf das Vorspannelement wirkenden Vorspannkraft. Durch diesen selbsttätig wirkenden Mechanismus wird eine konstante, aber einstellbare Anpresskraft der Leiste auf die Walze ermöglicht.

Besonders bevorzugt weist die Spannachse eine zu der Walzenachse parallele Orientierung auf, sodass die Gefahr eines Verklemmens der Leiste während der Zustellbewegung in Richtung der Walze nahezu ausgeschlossen werden kann.

Weiterhin erweist es sich als besonders zweckmäßig, wenn das Vorspannelement in der Betriebsposition entgegen einer einstellbaren Vorspannkraft, insbesondere eines Federelementes in eine der Walze abgewandte Richtung entgegen der Zustellrichtung zur Einstellung eines größeren Spaltmaßes des Spaltes zwischen der Leiste und der Walze beweglich ist. Dadurch erfolgt eine selbsttätige, kraftabhängige Einstellung des Spaltes durch das Vorspannelement, welches aufgrund der Federvorspannung stets mit der vorbestimmten Kraft gegenüber der Walze anliegt bzw. den Spalt begrenzt, wobei eine Ausweichbewegung aufgrund veränderter Druckverhältnisse entgegen der Vorspannkraft selbsttätig erfolgen kann.

Darüber hinaus ist vorzugsweise auch das Vorspannelement mittels des Trägers entgegen der Wirkung der Vorspannkraft des Federelementes in einer die Leiste nicht oder nur geringfügig belastende Ruheposition beweglich, in welcher das Vorspannelement und die Leiste einen größeren Abstand aufweisen, um so die Zugänglichkeit zu dem Fließkanal zu verbessern.

Dabei kann der untere Teil des Fließkanales beispielsweise auch fester Bestandteil des Spritzkopfes sein. Bestimmend für die Austrittsbreite ist das auswechselbare Kopfoberteil, sodass zur Änderung der Austrittsbreite lediglich ein einziges Bauteil zu wechseln ist. Hierdurch wird der Vorgang vereinfacht und der hierzu erforderliche Zeitaufwand vermindert.

Dabei weist das Vorspannelement eine erste Kontaktfläche für den mit dem Druckübertragungselement ausgestatteten Träger und eine zweite Kontaktfläche für die Leiste auf, wobei die Flächen bzw. die Flächennormalen dieser Flächen zueinander eine geneigte, insbesondere eine zueinander senkrechte Orientierung aufweisen. Hierdurch wird eine kinematische Kopplung des die Leiste tangential zu der Walze gegen die Anlagefläche vorspannenden Druckübertragungselementes und des die Leiste radial gegen die Walze vorspannenden Vorspannelementes erreicht, indem die beiden Vorspannkräfte insbesondere beim Öffnen des Spritzkopfes zugleich reduziert bzw. unterbrochen werden. Insbesondere wirkt keine radiale Vorspannkraft mehr auf die Leiste, wenn die die Leiste an der Anlagefläche fixierenden Haltekräfte aufgehoben werden. Hierdurch wird die Bedienung weiter vereinfacht.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer geschnittenen Seitenansicht in
Fig. 1 einen Spritzkopf einer Extrusionsvorrichtung in einer Betriebsposition;
Fig. 2 den in Figur 1 gezeigten Spritzkopf in einer Ruheposition;
Fig. 3 eine Detaildarstellung des in Figur 1 gezeigten Spritzkopfes in einer Betriebsposition.

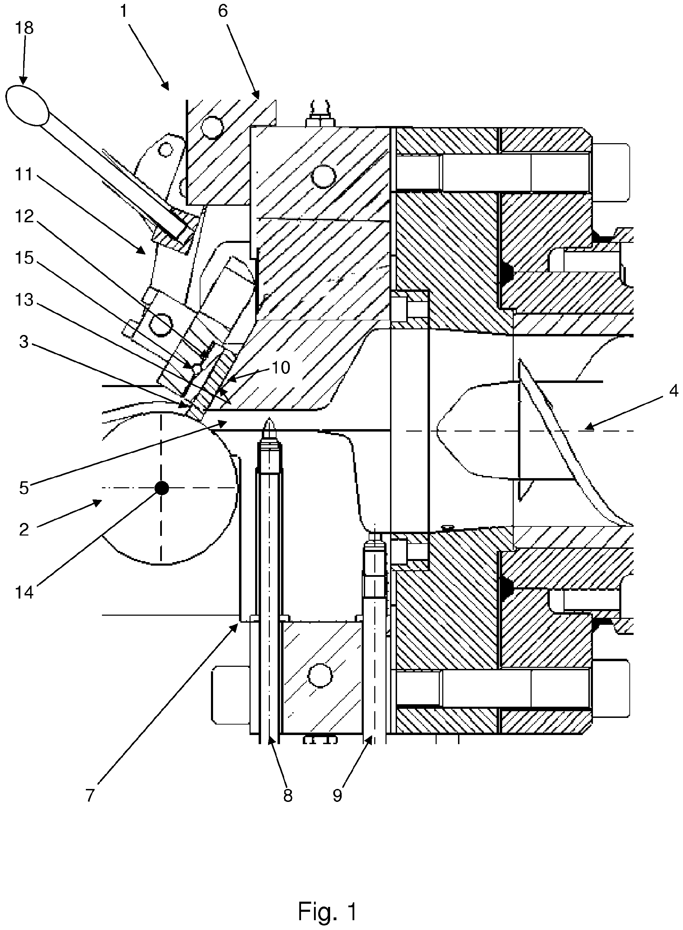

Die mit einem Spritzkopf 1 ausgestattete erfindungsgemäße Extrusionsvorrichtung wird nachstehend anhand verschiedener Schnittdarstellungen der Figuren 1 bis 3 näher erläutert. Die Extrusionsvorrichtung dient zur Herstellung eines nicht gezeigten Profiles aus plastifizierbarem Material. Die Formgebung des Profiles erfolgt dabei in einem Spalt zwischen einer Walze 2 und einer als Profilleiste ausgeführten Leiste 3 in einem einer Extruderschnecke 4 abgewandten Bereich eines Fließkanales 5, welcher durch ein auswechselbares oberes Kopfteil 6 und ein mit dem Spritzkopf 1 verbundenes unteres Kopfteil 7 begrenzt ist. Das untere Kopfteil 7 dient dabei zugleich der Aufnahme eines Temperatursensors 8 sowie eines Drucksensors 9, während das obere Kopfteil 6 eine Anlagefläche 10 für die Leiste 3 bildet.

In der in Figur 1 dargestellten Betriebsposition der Extrusionsvorrichtung ist die Leiste 3 mittels eines Fixierelementes 11 in einer vorbestimmten Position gegen die Anlagefläche 10 mit einer Kraft Ft vorgespannt. Hierzu hat das Fixierelement 11 ein flächiges Druckübertragungselement 12, welches gegen eine Druckfläche 13 der Leiste 3 anliegt. Zur selbsttätigen Einstellung der gewünschten parallelen Orientierung des Druckübertragungselementes 12 gegenüber der Druckfläche 13 ist das Druckübertragungselement 12 um eine zu einer Walzenachse 14 der Walze 2 parallelen Achse 15 schwenkbar, die durch den Flächenschwerpunkt des Druckübertragungselementes 12 verläuft und die Druckfläche 13 in zwei im Wesentlichen übereinstimmend große Teilflächen unterteilt.

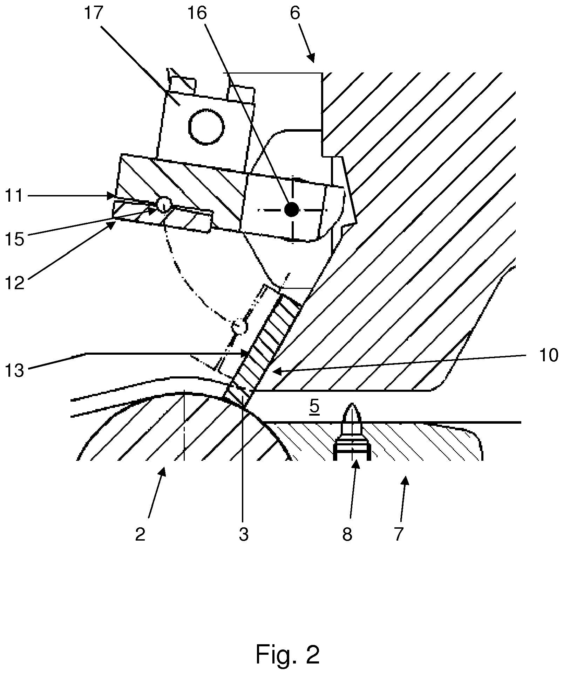

Das Druckübertragungselement 12 ist seinerseits an einem schwenkbeweglichen Träger 17, der eine zu der Achse 15 parallele Schwenkachse 16 hat, an einem abgewandten Endabschnitt gehalten und gemeinsam mit dem Träger 17 in eine in Figur 2 gezeigten Ruheposition schwenkbeweglich. Zur Einstellung dient ein in Figur 1 erkennbarer manuell betätigbarer Bedienhebel 18, der nach dem Kniehebelprinzip selbstklemmend ausgeführt ist.

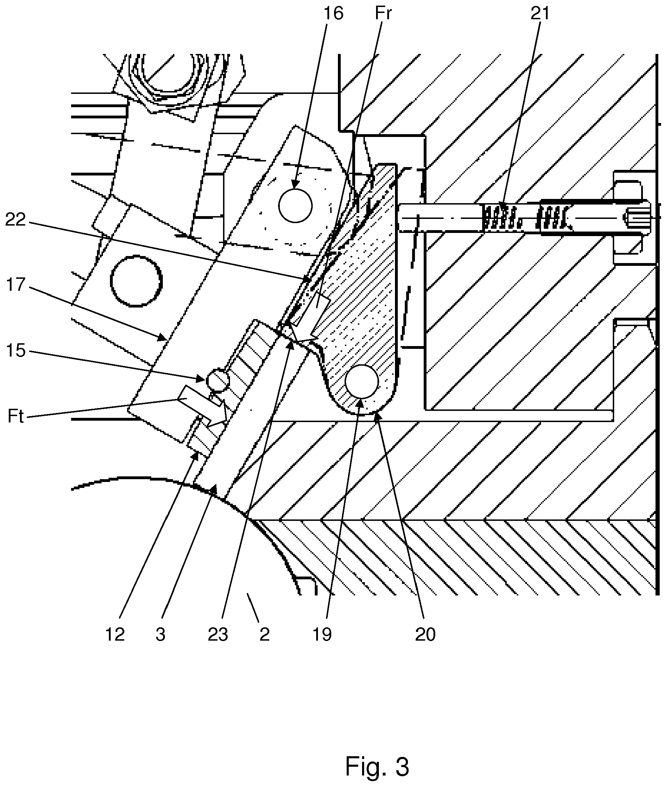

Zusätzlich zu der Fixierung der Leiste 3 durch das Druckübertragungselement 12 gegenüber der Anlagefläche 10 als Widerlager ist die Extrusionsvorrichtung noch mit einem um eine Spannachse 19 schwenkbeweglichen Vorspannelement 20 ausgestattet, durch welches die Leiste 3 zusätzlich gegenüber der Walze 2 in radialer Richtung mit einer Kraft Fr vorgespannt ist, wie dies in Figur 3 erkennbar ist. Die Spannachse 19 hat hierzu eine zu der Walzenachse 14 sowie zu der Schwenkachse 16 des Trägers 17 parallele Orientierung. In der Betriebsposition ist das Vorspannelement 20 durch eine auf die Leiste 3 wirkende einstellbare Vorspannkraft eines Federelementes 21 belastet, die somit im Betrieb konstant ist. Dabei hat das Vorspannelement 20 eine erste Kontaktfläche 22 für den Träger 17 des Druckübertragungselementes 12 und eine hierzu orthogonale zweite Kontaktfläche 23 für die Leiste 3. Hierdurch führt eine Schwenkbewegung des Vorspannelementes 20 in die in Figur 3 lediglich gestrichelt dargestellte Ruheposition zu einer Verlagerung des Vorspannelementes 20 entgegen der Vorspannkraft des Federelementes 21, wodurch zugleich die Leiste 3 entlastet wird.

**BEZUGSZEICHENLISTE**

| | | | |
|---|---|---|---|
| 1 | Spritzkopf | 16 | Schwenkachse |
| 2 | Walze | 17 | Träger |
| 3 | Leiste | 18 | Bedienhebel |
| 4 | Extruderschnecke | 19 | Spannachse |
| 5 | Fließkanal | 20 | Vorspannelement |
| 6 | Kopfteil | 21 | Federelement |
| 7 | Kopfteil | 22 | Kontaktfläche |
| 8 | Temperatursensor | 23 | Kontaktfläche |
| 9 | Drucksensor | | |
| 10 | Anlagefläche | | |
| 11 | Fixierelement | | |
| 12 | Druckübertragungselement | Fr | Kraft |
| 13 | Druckfläche | Ft | Kraft |
| 14 | Walzenachse | | |
| 15 | Achse | | |

## Patentansprüche

1. Eine zur Herstellung eines Profils aus plastifizierbarem Material bestimmte Extrusionsvorrichtung mit zumindest einem Spritzkopf (1), in dem das plastifizierte Material einem Spalt zuführbar ist, der durch zumindest eine Walze (2) und zumindest eine in einer Betriebsposition der Extrusionsvorrichtung mittels eines Fixierelementes (11) in einer vorbestimmten Position gegen eine Anlagefläche (10) anliegende Leiste (3) begrenzt ist, wobei das Fixierelement (11) ein insbesondere flächiges Druckübertragungselement (12) aufweist, welches in der Betriebsposition gegen eine der Anlagefläche (10) als Widerlager gegenüberliegende Druckfläche (13) der Leiste (3) anlegbar ist, wobei die Leiste (3) durch ein Vorspannelement (20) in radialer Richtung bezogen auf die Walze (2) gegenüber dieser in der Betriebsposition mit einer Kraft (Fr) vorgespannt ist und das Vorspannelement (20) eine erste Kontaktfläche (22) für einen mit dem Druckübertragungselement (12) ausgestatteten Träger (17) und eine zweite Kontaktfläche (23) für die Leiste (3) aufweist, wobei die Ebenen der beiden Kontaktflächen (22, 23) eine Neigung zueinander, insbesondere eine zueinander senkrechte Orientierung aufweisen, **dadurch gekennzeichnet, dass** das Vorspannelement (20) als ein Schwenkhebel ausgeführt ist, der um eine zu der Walzenachse (14) parallele Spannachse (19) schwenkbeweglich ist, wobei das Druckübertragungselement (12) zum Ausgleich von Abweichungen von seiner gewünschten bzw. vorbestimmten parallelen Orientierung gegenüber der Druckfläche (13) der Leiste (3) als eine um zumindest eine Achse (15) schwenkbarer doppelarmiger Hebel ausgeführt ist.

2. Extrusionsvorrichtung nach Anspruch 1, **dadurch gekennzeichnet, dass** das Vorspannelement (20) in der Betriebsposition zur Reduzierung der Vorspannung der Leiste (3) gegen die Walze (2) entgegen einer einstellbaren Vorspannkraft, insbesondere eines Federelementes (21) in eine der Walze (2) abgewandte Richtung beweglich ist.

3. Extrusionsvorrichtung nach Anspruch 1 oder 2, **dadurch gekennzeichnet, dass** das Vorspannelement (20) mittels des Trägers (17) entgegen der Wirkung der Vorspannkraft in eine die Leiste (3) nicht oder nur geringfügig belastete Ruheposition beweglich ist.

## Claims

1. An extrusion device intended for producing a profile of plasticizable material, with at least one extruder head (1), in which the plasticizable material can be fed to a gap which is delimited by at least one roller (2) and at least one bar (3) which, in an operating position of the extrusion device, abuts a bearing surface (10) in a predetermined position by means of a fixing element (11), wherein the fixing element (11) has an in particular planar pressure transmission element (12) which, in the operating position, can be made to abut a pressure surface (13) of the bar (3) facing the bearing surface (10) as an abutment,
wherein, in the operating position, the bar (3) is pretensioned by a pretensioning element (20) with a force (Fr) in a radial direction with respect to the roller (2) in relation thereto, and the pretensioning element (20) has a first contact surface (22) for a carrier (17) equipped with the pressure transmission element (12) and a second contact surface (23) for the bar (3), wherein the planes of the two contact surfaces (22, 23) have an inclination in relation to one another, in particular a perpendicular orientation in relation to one another, **characterized in that** the pretensioning element (20) is configured as a pivoting lever which is pivotably moveable about a tension axis (19) parallel to the roller axis (14), wherein the pressure transmission element (12) is configured as a double-armed lever, which can be pivoted about at least one axis (15), for the purposes of compensating deviations from the desired or predetermined parallel orientation of said pressure transmission element with respect to the pressure surface (13) of the bar (3).

2. Extrusion device according to Claim 1, **characterized in that**, in the operating position, the pretensioning element (20) can be moved in a direction away from the roller (2) for the purposes of reducing the pretensioning of the bar (3) against the roller (2) counter to a settable pretensioning force, in particular of a spring element (21).

3. Extrusion device according to Claim 1 or 2, **characterized in that** the pretensioning element (20) can be moved into a rest position, which is not loaded or is only slightly loaded the bar (3), counter to the action of the pretensioning force by means of the carrier (17).

## Revendications

1. Dispositif d'extrusion prévu pour fabriquer un profilé en matériau plastifiable, comprenant au moins une tête d'injection (1) dans laquelle le matériau plastifié peut être acheminé à une fente qui est limitée par au moins un rouleau (2) et au moins une baguette (3) s'appliquant, au moyen d'un élément de fixation (11), dans une position prédéterminée contre une surface d'appui (10) dans une position de fonctionnement du dispositif d'extrusion, l'élément de fixation (11) présentant un élément de transfert de pression (12) en particulier plat, qui, dans la position de fonctionnement, peut être appliqué contre une surface de pression (13) de la baguette (3) opposée en tant que butée à la surface d'appui (10),
la baguette (3) étant précontrainte dans la position de fonctionnement avec une force (Fr) par un élément de précontrainte (20), dans la direction radiale par rapport au rouleau (2), par rapport à ce dernier et l'élément de précontrainte (20) présentant une première surface de contact (22) pour un support (17) muni de l'élément de transfert de pression (12) et une deuxième surface de contact (23) pour la baguette (3), les plans des deux surfaces de contact (22, 23) présentant une inclinaison l'un par rapport à l'autre, en particulier une orientation perpendiculaire l'un par rapport à l'autre,
**caractérisé en ce que** l'élément de précontrainte (20) est réalisé sous forme de levier pivotant qui est déplaçable par pivotement autour d'un axe de serrage (19) parallèle à l'axe de rouleau (14), l'élément de transfert de pression (12) étant réalisé, pour compenser les écarts de son orientation parallèle souhaitée ou prédéterminée par rapport à la surface de pression (13) de la baguette (3), sous forme de levier à deux bras pouvant pivoter autour d'au moins un axe (15).

2. Dispositif d'extrusion selon la revendication 1,
**caractérisé en ce que** l'élément de précontrainte (20) est déplaçable dans une direction opposée au rouleau (2) dans la position de fonctionnement, pour réduire la précontrainte de la baguette (3) contre le rouleau (2) à l'encontre d'une force de précontrainte ajustable, en particulier d'un élément de ressort (21).

3. Dispositif d'extrusion selon la revendication 1 ou 2, **caractérisé en ce que** l'élément de précontrainte (20) est déplaçable au moyen du support (17) à l'encontre de l'action de la force de précontrainte dans une position de repos non sollicitée ou seulement faiblement sollicitée la baguette (3).
